(19) Europäisches Patentamt

European Patent Office

Office européen des brevets

(11) **EP 1 731 255 A2**

(12) **EUROPEAN PATENT APPLICATION**

(43) Date of publication:
**13.12.2006 Bulletin 2006/50**

(51) Int Cl.:
*B23K 26/06* (2006.01)  *G02B 27/09* (2006.01)
*G02B 5/18* (2006.01)  *G02B 27/44* (2006.01)

(21) Application number: **06011493.1**

(22) Date of filing: **02.06.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **07.06.2005 JP 2005166337**

(71) Applicant: **SUMITOMO ELECTRIC INDUSTRIES, INC.**
**Chuo-ku,**
**Osaka (JP)**

(72) Inventor: **Hirai, Takayuki c/o Osaka Works of Sumitomo**
**Konohana-ku**
**Osaka (JP)**

(74) Representative: **HOFFMANN EITLE**
**Patent- und Rechtsanwälte**
**Arabellastrasse 4**
**81925 München (DE)**

(54) **Wedge homogeniser optical system with diffraction optical element**

(57)    In a diffractive optical element (DOE) for diffracting a Gaussian distribution beam into a uniform or quasi-uniform power distribution beam on an image plane, step height errors or other manufacturing errors yield a zero-th order beam, cause interference between the diffracted beam and the zero-th order beam and invite power fluctuation. Instead of a parallel planar shape, a wedge-shaped DOE (3) having surfaces inclining at an angle $\Theta$ in average separates the zero-th order beam from the diffraction beam (2), prevents the zero-th order beam from interfering with the diffraction beam (2) and suppress power fluctuation of the diffraction beam. The wedge angle $\Theta$ satisfies an inequality $\Theta \geqq \{\Upsilon + (D/L)\}/(n-1)$, where D is a diameter of the incident beam (3), n is a refractive index of the DOE (3), L is a distance between the DOE (3) and the image plane (5), and $\Upsilon$ is an angle viewing the uniform power pattern on the image plane from the center of the DOE (3).

## Fig.3

(a) no step error

(b) step error occurs

EP 1 731 255 A2

**Description**

This invention relates to an improvement of a homogenizer DOE (diffraction optical element) system capable of converting a Gaussian power distribution laser beam into a uniform power distribution (tophat) beam. High power lasers have been more and more applied to laser processings, for example, boring holes, cutting grooves and welding metals. The laser processings have a variety of purposes of welding, cutting, annealing, boring and so on.
Some fields of the laser processings require the conversion of a Gaussian power distribution of a laser beam into a uniform (tophat) or quasi-uniform power density distribution. There are two kinds of optical systems for converting a Gaussian beam into a uniform or quasi-uniform power distribution beam. One is an aspherical lens system. The other is a diffraction optical element (DOE) system. The optical system which converts a Gaussian power distribution beam into a uniform or quasi-uniform power beam is called a "homogenizer". This invention relates to a DOE type homogenizer.

① Jari Turunen, Frank Wyrowski, "Diffractive Optics for Industrial and Commercial Applications", Akademie Verlag, p165-188 describes diffraction optical elements (DOE) for homogenizing a Gaussian power density beam into a uniform (tophat) power density beam by citing a variety of examples of DOEs. Here, the diffraction optical elements (DOE) include not only a homogenizer capable of uniforming at a circular section but also a homogenizer capable of uniforming at a rectangular section.
② Frank Wyrowski, "Diffractive optical elements: iterative calculation of quantized, blazed phase structures", J. Opt. Soc. Am. A, Vol. 7, No.6, June 1990, p.961-969 proposes a DOE apparatus capable of diffracting an incident laser beam into shapes of arbitrary figures or characters. For example, a series of characters such as "UNI ESEN FRG" is depicted on an image plane. This is no homogenizer. High degree of freedom allows DOEs such an application.
③ Japanese Patent Laying Open No.2002-202414, "Beam conversion elements, illumination system using the beam conversion elements, exposure apparatus, laser processing apparatus and laser beam projecting apparatus" suggests a holographic system which converts a Gaussian distribution beam into a uniform power distribution beam by two holograms.
④ Japanese Patent Laying Open No.9-61610, "Binary optics, converging optical system and laser processing apparatus using same" suggested a DOE system which converts a mountain power distribution laser beam waist to a uniform power distribution beam waist.
⑤ USP6,433,301(Dunsky et al.,"Beam Shaping and Projection Imaging with Solid State UV Gaussian Beam to Form Visa", suggests a diffractive optical element for diffracting a Gaussian power (mountainous) distribution beam into a flat uniform power beam.
⑥Japanese Patent Laying Open No. 2004-230432, "Collective multipoint homogenizing optical system", proposes a diffraction optical system composed of a homogenizer DOE converting a Gaussian beam into a uniform power distribution beam, a noise-cutting aperture mask with a wide window disposed at a focus and a branching DOE for dividing the uniformed beam into plural beams, for converting a Gaussian power distribution beam into a plurality of uniform power density beams.

DOEs are endowed with high degree of freedom. High degree of freedom enables a DOE to change a Gaussian beam to a uniform or quasi-uniform beam.
There are a transmission type of DOE and a reflection type of DOE. Here the transmission type DOE is explained. The transmission type DOE is a transparent plate composed of small pixels σ with different step heights (thicknesses) aligning lengthwise and crosswise. A unit height ε of the step heights is determined to be a quotient of a wavelength light path difference $\lambda/(n-1)$ divided by a constant step number w. Namely $\varepsilon = \lambda/w(n-1)$, where n is a refractive index of the DOE and λ is a wavelength of light. In usual, w is an exponent of 2, for example, w is 2, 4, 8, 16, 32, 64, 256, ...and so on. Namely $w = 2^b$: b= 1, 2, 3, 4, 5,....and so on. The number of horizontally aligning pixels is denoted by M and the number of vertically aligning pixels is denoted by N. The total number of pixels is MN. The pixel size is denoted by d. The area of a pixel is denoted by $d\times d$. An effective area of the DOE is $Md\times Nd$.
A DOE varies phase of transmitting rays by the variation of thicknesses of pixels. Two dimensional coordinate (u, v) is defined on the DOE. Since pixels are discrete members, a set of integers can denote pixels. But continual variables (u, v) are allotted to pixels for designating their positions. A complex transmittance of a pixel (u,v) is denoted by T(u, v). The phase φ of a ray transmitting via (u, v) is changed by the thickness h(u, v). The phase difference (u, v) is related to the thickness h(u,v) of pixels by the following equation.

$$\varphi(u,\ v) = (2\pi/\lambda)\ (n-1)\ h(u,\ v). \quad (1)$$

The complex transmittance T(u,v) is coupled with the phase difference φ(u, v) by the following relation.

$$T(u,v) = \exp(i\varphi(u,v)). \qquad (2)$$

An incident beam is assumed to be a plane wave, which has the same phase on a plane vertical to the beam axis. Complex amplitude of light changes in two dimensions. Incident complex amplitude is denoted by a(u, v). Complex amplitude is otherwise called a wavefunction. Transmission in the DOE, which has the complex transmittance T(u,v), changes the complex amplitude to a(u,v)T(u,v). The distance from the DOE to the image plane is designated by L. Another two dimensional coordinate (x,y) is defined on the image plane. The distance from pixel (u,v) on the DOE to a point (x,y) on the image plane is designated by q. A ray from (u,v) to (x,y) changes the complex amplitude by exp(ikq). Here k is a wavenumber of the light. $k = 2\pi n/\lambda$. Complex amplitude on the image plane is represented by I(x,y). A partial contribution dI(x,y) from pixel (u,v) to I(x,y) is

$$dI(x,y) = a(u,v)T(u,v)\exp(ikq)dudv. \qquad (3)$$

Symbols dI(x,y), du and dv are differentials of I(x,y), u and v. Integration of a(u,v)T(u,v)exp(ikq) by u and v gives the image plane a whole complex amplitude (wave function).

$$I(x,y) = \iint a(u,v)T(u,v)\exp(ikq)dudv. \qquad (4)$$

$\iint dudv$ means summation with regard to all the pixels on the DOE. Summation is represented by double integrals. The term exp(ikq), which transcribes DOE transmittance T(u,v) to the image plane, gives the effect of diffraction. It is difficult to calculate the contribution of exp(ikq) exactly. For avoiding the difficulty, exp(ikq) shall be approximated. The approximation reduces the calculation of Eq.(4) to a Fourier transformation. The distance q between (u,v) on the DOE and (x,y) on the image plane is given by

$$q = \{(u-x)^2 + (v-y)^2 + L^2\}^{1/2}. \qquad (5)$$

Since the DOE/image-plane distance L is far larger than u, x, v and y, q is approximately reduced to

$$q = L + (u^2+v^2+x^2+y^2)/2L - (ux+vy)/L. \qquad (6)$$

Under the approximation, the above equation means that a(u, v)T(u, v)exp{(u²+v²)/2L} is connected with I(x, y)exp{(x²+y²)/2L} by Fourier and inverse-Fourier transformations.
The image plane (object plane) requires some restrictions. The condition on the image plane is predetermined. For example, the image power distribution function I(x,y) should be constant within a definite area and be zero outside of the area on the image. I(x,y)exp{(x²+y²)/2L} is determined on the image plane. Inverse-Fourier transformation of I(x, y)exp{(x²+y²)/2L} gives a(u,v)T(u,v)exp{(u²+v²)/2L} on the DOE plane.
The complex amplitude a(u,v), which is a wavefunction of an incident Gaussian laser beam, has been determined by the incident laser beam profile. Then a DOE complex transmittance T(u,v) is obtained. DOE's restrictions are imposed upon the DOE complex transmittance T(u,v).
When the DOE is fully transparent, no absorption occurs in the DOE. The absolute value of the transmittance should be 1. Thus | T(u,v) | = 1. This is a normalization condition. The inverse-Fourier transformed T(u,v) is not normalized to be 1. Thus a new DOE transmittance T(u,v) is replaced by T(u,v)/| T(u,v) |. The new transmittance T(u,v) is normalized to be 1. Intensity variation is trivial owing to transparency. Phase variation is important. Restriction-satisfying a(u,v)T(u, v)exp{(u²+v²)/2L} is obtained on the DOE. Fourier transformation of a(u,v)T(u,v)exp{(u²+v²)/2L} gives a renewal I(x,y) exp{(x²+y²)/2L} on the image. Image's restrictions should be imposed on the renewal I(x,y)exp{(x²+y²)/2L}. Maintaining the phase component, the on-image condition imposes that I(x,y) should be constant within the definite area and 0 outside of the area. A single cycle of Fourier and inverse-Fourier transformations is explained.
The same Fourier and inverse-Fourier transformations shall be repeated hundreds of times or thousands of times between the DOE plane and the image plane. The purpose of repeated calculations is to determine the transmittance T(u,v). Repetitions of Fourier/inverse-Fourier make T(u,v) converge to a definite function. A converged T(u,v) is obtained after the repeated calculations. The absolute value of T(u,v) is 1. Phase is important, as mentioned before. Eq.(2) determines phase distribution $\varphi(u,v)$ of (u,v) pixels of the DOE from the calculated T(u,v). Eq.(1) allocates (u,v) pixels height distribution h(u,v) (thickness distribution) (u,v) from $\varphi(u,v)$. Since the heights of all pixels are determined, a DOE for the purpose can be made by cutting all pixels to the designed heights.

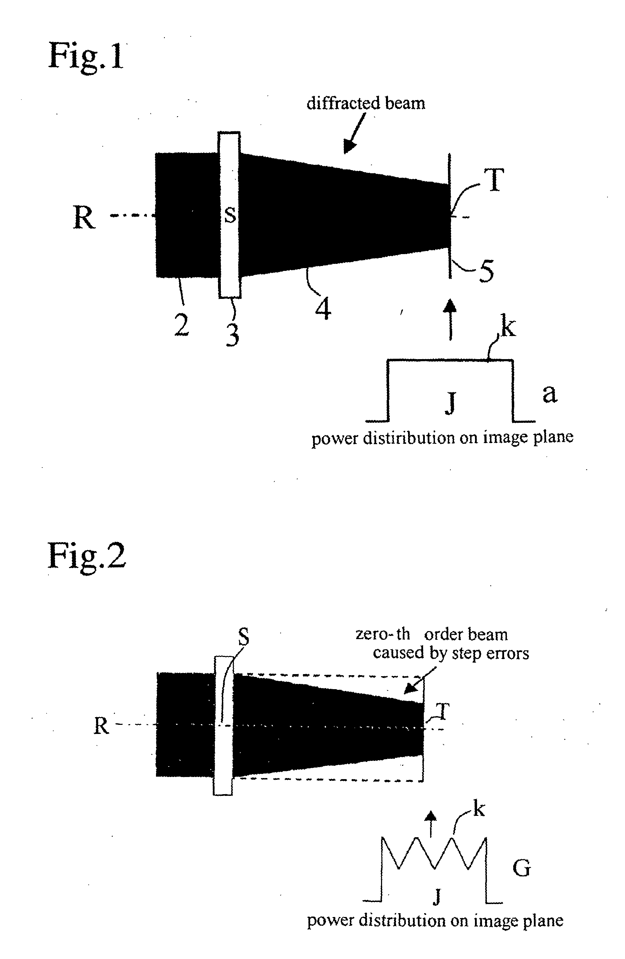

Fig.1 is a schematic view of a DOE homogenizer which converts a Gaussian power distribution beam into a uniform power beam within a reduced definite area on an image plane (work plane or an object). A wide Gaussian power density laser beam 2 shoots a homogenizer DOE (diffractive optical element) 3. The DOE 3 having plenty of two-dimensionally aligning pixels diffracts the Gaussian beam. The diffracted beam 4 is projected in a definite profile beam on the image plane 5. The purpose of the homogenizer DOE 3 is to make a uniform power density beam within the definite profile on the image plane 5. The main axis of the diffracted beam is RST shown in Fig.1. The image plane 5 corresponds to a plane of an object to be processed. Objects have a variety of sizes, shapes and materials. The purposes of the processing are boring, cutting, annealing, welding and so on. In practice, an object is set on the image plane 5. The object to be processed is the image plane 5 itself. The object plane is briefly expressed as an "image plane" 5.

The purpose of the DOE is to make a uniform power density (homogenized) beam within a definite area on the image plane 5. A righthand figure of Fig. 1 shows a desired power density profile on the image plane. Power density is constant within an area J and 0(zero) outside of the area J. Within J, power distribution should be represented by a straight line k. This is an ideal homogenizer. But it is difficult to realize such a uniform power profile on the image plane by a homogenizer DOE.

Heights of pixels are quantized into discrete step values in a DOE. Differences of heights of pixels are multiples of a unit height $\varepsilon$. Pixels are made by mechanical cutting. Some materials allow etching to make a variety of discrete pixel heights of a DOE. Cutting step of micro-sized pixels (for example, 5$\mu$m square) is a difficult ultrafine processing. Cutting errors accompany the pixel processing. There are a variety of cutting errors. The most serious error, which gives the worst influence on the homogenizing property, is a "step height error" of pixels. The step height error means that actual step heights deviate from the calculated, designed heights of pixels.

If step height errors accompany the fabrication of a DOE, a new beam which is not fully diffracted but goes straightly along the axis is yielded. The non-diffracted straight-forward going beam is called a "zero-th order" beam. The zero-th order beam is invited by the step height errors. If the zero-th order beam happens, the zero-th order beam interferes with the diffracted beam.

Fig.2 demonstrates the zero-th order beam and the diffraction beam. The black-sectioned converging beam is the diffracted beam. Dotted lines denoting a parallel beam is the zero-th order beam caused by step errors. Both the diffraction beam and the zero-th order beam make their way along the axis RST and shoot a common area on the image plane. The zero-th order beam superposes on the diffraction beam.

Interference occurs between the zero-th order beam and the diffraction beam. The interference causes zigzag-fluctuating power distribution k' within J on the image shown at a righthand of Fig.2. Zigzag fluctuating power beams are inappropriate for boring, annealing and welding, which require uniform power per unit area on objects. Degeneration of power distribution should be suppressed for homogenizer DOEs.

The resultant beam on the image is a uniform power density beam. Big discontinuity accompanies boundaries between an irradiated area and a non-irradiated area of the resultant beam. The discontinuity invites instability of power profile on the image. Instability exaggerates the interference between the zero-th order beam and the diffraction beam. A purpose of the present invention is to provide a DOE which prevents the resultant beam from fluctuating in a big zigzag profile k' on the image. In other words, a purpose of the present invention is to provide a homogenizer DOE which can suppress the interference between the zero-th order beam and the diffraction beam.

This invention proposes a wedged homogenizer DOE with unparallel surfaces prepared by slanting a front surface, a rear surface or both surfaces. Instead of parallel surfaces, the DOE has unparallel front and rear surfaces. The unparallel surfaced shape is called a "wedge". The present invention gives a DOE a wedge-shape. The wedge-shaped DOE refracts the zero-th order beam in an off-axis direction but allows the diffracted beam to pass straightly on the axis. The wedge-shaped DOE can separate the zero-th order beam from the diffracted beam. The area at which the zero-th order beam attains on the image plane does not overlap with but separates from the area at which the diffracted beam attains on the image plane. No interference occurs between the zero-th order beam and the diffracted beam on the image plane.

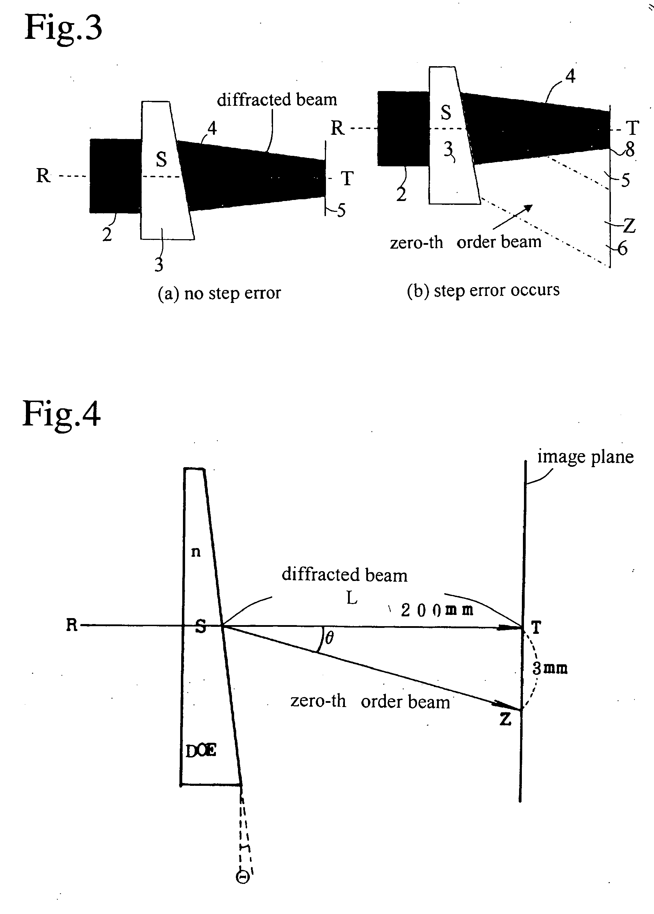

Fig.3(a) and Fig.3(b) show wedge-shaped DOE optical systems proposed by the present invention. Fig.3(a) denotes laser beam propagation in the case of a wedge-shaped DOE without step height errors. A Gaussian beam 2 emanated from a laser or a Gaussian beam 2 widened to a large diameter by a beam expander goes into the wedge DOE 3 of the present invention. The wedge-shaped DOE 3 diffracts the Gaussian beam. The diffracted beam 4 propagates along a straight axis RST. The beam axis RST is not orthogonal to the rear surface of the DOE 3. The diffracted beam 4 shoots an image plane 5 as a uniform power distribution beam.

Though the DOE has a shape of wedge, the DOE diffracts the beam in a straightforward direction. The straightforward diffraction enables the laser, the DOE and the image plane (object) to align along a straight line. Without step errors, the DOE produces only the diffracted beam 4 as shown in Fig.3(a). When step height errors accompany the DOE, the zero-th order beam 6 arises. Fig.3(b) shows a case of a DOE including step errors. The step errors induce the zero-th order beam 6 denoted by dotted lines. The zero-th order beam 6 does not advance along a straight line. The zero-th order beam 6 is bent in a slanting direction toward the direction of the thickness increasing. The image plane 5 is far distanced from the DOE 3. The zero-th order beam 6 shoots the image plane at a diverted part (Z). The zero-th order beam 6 is separated from the diffraction beam pattern 8 on the image plane 5. The zero-th order beam 6 does not overlap with the diffraction beam pattern 8 on the image. The zero-th order beam (RSZ) 6 does not interfere with the diffraction beam (RST) 4 on the image plane 5. No power density fluctuation is induced.

Common sense would allege that a zero-th order beam would be a noise going straightforward without bending at a diffraction member. But this is wrong. Strictly speaking, the zero-th order beam should be a diffraction beam having the zero-th order of diffraction without path difference. When a DOE is not planar one but a wedged one, the zero-th order beam is not diffracted and does not go straight. The zero-th order beam is bent in the direction of the thickness increasing like refraction at a flat wedge block. Bending of the zero-th order rays is important for a wedge DOE. Since the image (plane) 5 is far separated from the DOE 3, projection of the zero-th order rays on the image 5 is distanced from the pattern 8 of the diffraction beam 4 on the image 5. The zero-th order beam 6 does not overlap with the diffraction beam 4 on the image 5. The zero-th order beam 6 (RSZ) does not interfer with the diffraction beam 4 (RST) on the image 5.

How high degrees does the separation of the zero-th order beam from the diffraction beam requires the DOE for an wedge angle? An angle of viewing the uniform power pattern on the image from the center of the DOE is denoted by T. The distance between the DOE 3 and the image plane 5 is denoted by L. The diameter of the incident beam is D. The bend angle $\theta$ of the zero-th order beam must satisfy an inequality of $T + (D/L) \leqq \theta$ for preventing the zero-th order beam from overlapping with the diffraction beam 4 on the image plane 5. The wedge angle $\Theta$ is related to the zero-th order bending $\theta$ by an equation $\theta = \sin^{-1}(n\sin\Theta) - \Theta$. A condition $T + D/L \leqq \{\sin^{-1}n\sin\Theta - \Theta\}$ is imposed upon the wedge angle $\Theta$ for separating the zero-th order and diffraction beams. In brief, the spatial separation requires a more restricted condition $\Upsilon + (D/L) \leqq (n-1)\Theta$ or $\{\Upsilon + (D/L)\}/(n-1) \leqq \Theta$ for the wedge angle $\Theta$.

The wedge DOE proposed by the present invention has a wedge shape as a whole. But microscopically every pixel has no inclining top but has a top parallel to the standard plane. The wedge is a collective shape. The wedge surface has a zigzag outline in a microscopic scale. The zero-th order beam is directed in a direction where a path difference between a ray emanating from a spot of a pixel and another ray emanating from a corresponding spot of a neighboring pixel is zero. The zero-th order beam has a definite width of D, where D is an incident beam diameter. The diffraction beam has also a width of T L, where L is a distance between the DOE and the image. A sum of the widths is $T + (D/L)$. The minimum bending power of a wedge angle $\Theta$ is $(n-1)\Theta$, which is known in prism optics. Intuition can understand the non-overlapping requirement $T + (D/L) \leqq (n-1)\Theta$. The relation will be clarified again.

To achieve the foregoing objects and in accordance with the purpose of the invention, embodiments will be broadly described herein.

This invention shapes a DOE into a wedge having inclining, non-parallel surfaces. The wedge enables the DOE to spatially separate the zero-th order beam from the diffracted beam. Even if step height errors accompany pixels, spatial separation prevents the zero-th order beam from interfering with the diffracted beam. No interference occurs. The DOE can maintain uniform power distribution of the diffracted beam on the image plane in spite of pixel step errors.

The gist of the present invention is to make a wedge-shaped DOE capable of preventing the zero-th order beam from going straight forward, bending the zero-th order beam in a slanting direction, deviating the zero-th order beam from the diffraction beam line (RST) and prohibiting the zero-th order beam from interfering with the diffraction beam. However, pixels of any DOE have flat tops parallel with the standard plane (DOE surface). A wedge-shaped DOE of the present invention has pixels with flat tops. The DOE is a wedge on the whole. But individual pixels have no slanting tops but flat tops. There is no wedge steps of pixels in a wedge DOE in a microscopic scale. Analogy of a wedge glass assumes that a wedge DOE would bend the zero-th order beam in the direction of a increasing thickness. But it is not proved yet that a Wedge DOE with flat tops of pixels would bend the zero-th order beam like refraction by a wedge glass block. Can or cannot a wedge-shaped DOE bend the zero-th order beam in the direction of increasing a thickness? Don't confuse diffraction with refraction.

Isn't the beam, which is immune from diffraction, named as zero-th order beam due to the reason that the beam is not diffracted by a DOE? Even a wedge DOE is a set of pixels. Pixels have flat tops perpendicular to the axis. If the zero-th order beam is assumed to be bent by a wedge DOE, what is the reason of the zero-th order beam bending? It would be marvelous from the standpoint of geometric optics. This is a problem to be clarified first.

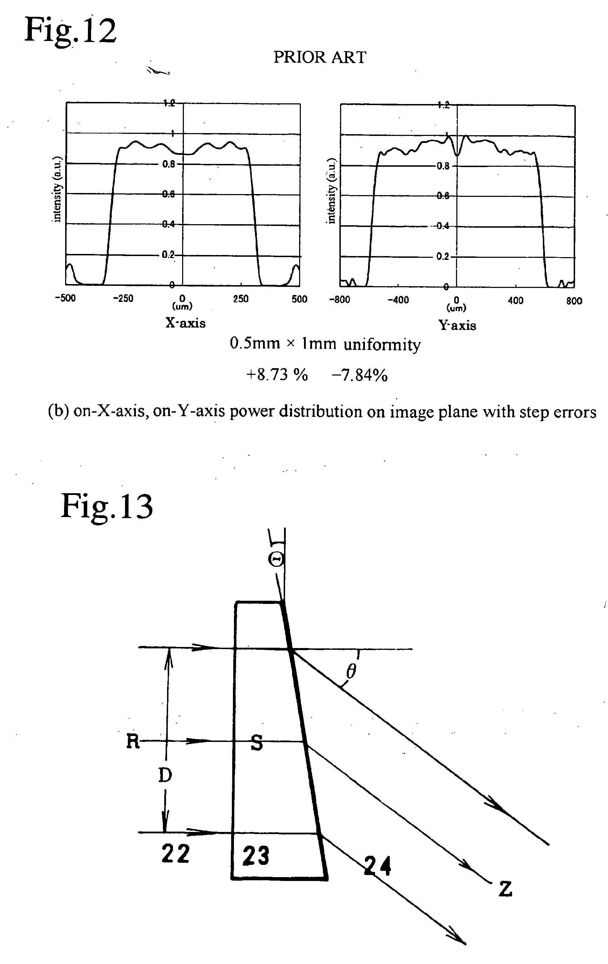

Fig.13 shows a view of a wedge glass block 23 with loci of rays refracted by the wedge glass block 23. The front surface of the glass block 23 is parallel to a plane which is defined as a plane perpendicular to the beam axis. The rear surface inclines at a wedge angle $\Theta$ to the plane. A parallel incident beam 22 with a diameter D goes into the wedge 23. The beam is refracted at the rear surface of the glass block 23. A refracted beam 24 bends and goes out of the wedge block 23 in a downward direction.

The plane perpendicular to the beam axis is called a "standard plane". In the example, the front surface is a standard plane. The rear surface bends the outgoing beam 24 at an angle θ, which is called a "bending angle". Snell's law requires $\sin(\theta+\Theta) = n\sin\Theta$ at the refraction on the rear surface. Θ is a wedge angle, θ is a bending angle and n is a refractive index of the glass block 23. The wedge angle Θ enables the glass block 23 to bend the incident beam 22 at θ. Refraction of a glass block like a prism, gives incident light, which corresponds to the zero-th order beam, a bending angle θ.

The bending angle θ is given by

$$\theta = \sin^{-1}(n\sin\Theta) - \Theta. \quad (7)$$

Here Θ is a wedge angle at which the rear surface inclines to the front surface of the glass block 23. The relation (7) is correct for a glass block having continual surfaces. A wedge DOE having an average inclination angle Θ between the surfaces should be considered. It is still questionable that a wedge DOE would lead the zero-th order beam in the direction of Eq.(7). Although average planes of both surfaces incline, individual pixels formed on a surface have all flat tops parallel to the other surface. Since all the pixels have microscopically flat steps which are parallel to the other surface, it would be still questionable whether the zero-th order beam is really bent by a macroscopically wedge-shaped DOE. Blunt insight is of no use.

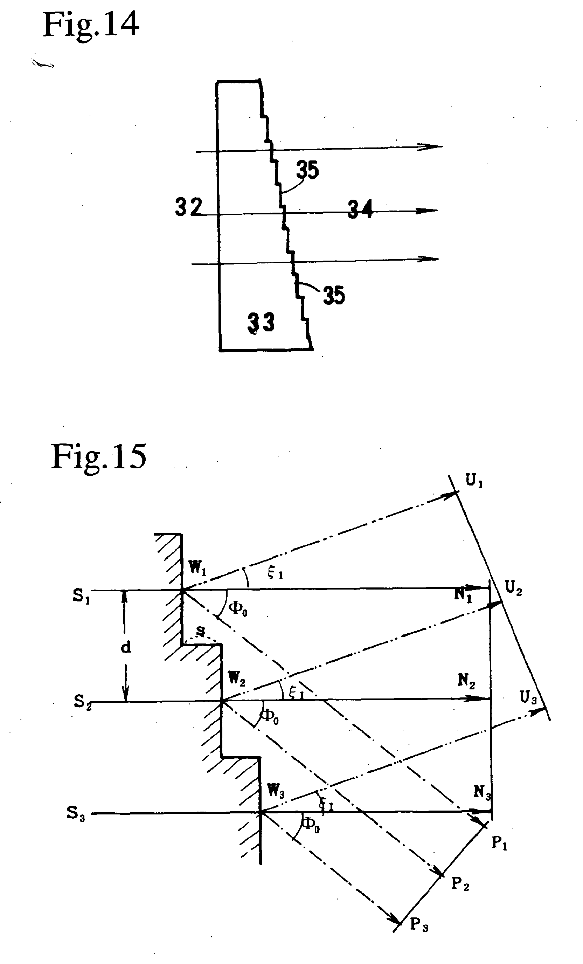

Fig. 14 shows a wedge-shaped DOE 33. In the example, a flat front surface is orthogonal to a beam axis. Standard plane is defined as a plane vertical to the beam axis. The front surface is a standard plane. A rear surface has plenty of pixels 35. Pixels 35 have individual flat tops parallel to the standard plane (front surface). A set of parallel incident rays enters the DOE 33 via the front surface, propagates in the DOE 33 and goes out of the DOE 33 via the pixels 35. Individual pixel steps are all parallel to the standard plane and orthogonal to the beam axis. Individual rays 34 would go straight out of pixels 35 without bending. Would the set of straight forward rays 34 be identical to the zero-th order beam? The question is that the zero-th order beam would not be bent by a macroscopically wedge-shaped DOE, since individual pixels have not slanting tops but have non-slanting tops microscopically.

All the steps of pixels are orthogonal to the beam axis. As long as Snell's law were taken account, the zero-th order beam which is a set of rays passing individual pixels would never bend. A sense of word "zero-th order" alleges straightforward progress. The zero-th order beam on a wedge DOE should be now considered.

Fig. 15 is a sectioned view of three steps of pixels of a wedge DOE for clarifying the zero-th order beam. A vertical length of a pixel is denoted by "d". This is called a "pixel size". A wedge DOE is prepared by quantizing the continual wedge shown in Fig.13, which has an inclination (wedge) angle Θ. Differences of step heights between neighboring pixels are all equal to "s", which is determined by $s/d = \tan\Theta$. An actual DOE superposes a homogenizing step height mode and a converging step height mode on this wedge step mode. In the actual DOE, the average of step height differences between neighboring pixels should be equal to s. The average of step differences should be $d\tan\Theta$ in the actual DOE. Here s is a constant value $s = d\tan\Theta$, because the DOE should be an equivalent to one obtained by quantizing a Θ inclining wedge.

The incident beam is a set of parallel rays orthogonal to the standard plane(front surface). Three rays distanced by a pixel size d are considered. A first ray passes $S_1$ point in the DOE and goes out of the DOE via $W_1$ point. A second ray passes $S_2$ point in the DOE and goes out of the DOE via $W_2$ point. A third ray passes $S_3$ point in the DOE and goes out of the DOE via $W_3$ point. $W_1$, $W_2$ and $W_3$ are corresponding points which are separated from each other by a multiple of d (pixel size).

$S_1W_1N_1$, $S_2W_2N_2$ and $S_3W_3N_3$ are straightforward rays (solid lines) going out via $W_1$, $W_2$ and $W_3$. Are these three rays real or virtual? This is a problem. Obeying the refraction law, three rays $S_1W_1N_1$, $S_2W_2N_2$ and $S_3W_3N_3$ advance straightforward. However, optical path differences are not zero. An optical path is defined as the sum of products nl of a refractive index n and a path length 1. Σnl is a definition of an optical path length. Σ denotes summation of the following terms. The optical path length $S_2W_2N_2$ is longer than the optical path length $S_1W_1N_1$ by (n-1)s, where n is a refractive index of the DOE and s is a step height in Fig.15. Similarly, the optical path length $S_3 W_3N_3$ is longer than the optical path length $S_2W_2N_2$ by (n-1)s. Corresponding straightforward rays have a path difference of (n-1)s by a step.

Phases of the corresponding straightforward rays increase by $2\pi(n-1)s/\lambda$ step by step. The number of the corresponding straightforward rays is equal to the pixel number MN. The pixel number MN is a very large number. Since the basic phase difference $2\pi(n-1)s/\lambda$ is not a multiple of $2\pi$, the MN corresponding straightforward rays cancel by each other and die away. $S_1W_1N_1$, $S_2 W_2N_2$ and $S_3W_3N_3$ have no reality. Thus the corresponding straightforward rays like $S_1W_1N_1$, $S_2 W_2N_2$ and $S_3W_3N_3$ can be taken out of consideration. This point quite differs from geometric optics, which relies only upon refraction.

Light paths $S_1W_1P_1$, $S_2W_2P_2$ and $S_3W_3P_3$, which progress in parallel in the block, go out via corresponding

spots $W_1$, $W_2$ and $W_3$ on the neighboring steps, bend downward and make a wavefront $P_1P_2P_3$, are considered. A wavefront means a locus of the same phase or rays. If the light paths have no path difference, the rays reinforce themselves and make a real light beam in the direction. The angle of the downward beams $W_1P_1$, $W_2P_2$ and $W_3P_3$ to the axis is denoted by $\Phi_0$. A path difference between one light path and the next light path is $(S_2W_2P_2 — S_1W_1P_1) =$ ns— $(d\sin\Phi_0 + s\cos\Phi_0)$. If the optical path difference is a multiple of $\lambda$, the rays in the direction reinforce themselves and make a diffraction beam. In particular, if the light path difference $(S_2W_2P_2 — S_1W_1P_1)$ is 0, all the rays from all pixels coincide in phase with each other in the direction. The 0 difference condition is given by

$$\text{ns} - (d\sin\Phi_0 + s\cos\Phi_0) = 0. \quad (8)$$

Eq.(8) proposes a condition of the non-light path difference on a wedge DOE. Namely Eq.(8) is a zero-th order equation in a wedge DOE. The zero-th order beam is one which is determined by Eq.(8). The straightforward beam is not the zero-th order beam. Eq.(8) is the zero-th order beam in a wedge DOE. Similarly, an m-th order beam, which has a light path difference of m times as large as $\lambda$, is defined by one which satisfies the following restriction.

$$\text{ns} - (d\sin\Phi_m + s\cos\Phi_m) = m\lambda. \quad (m=\pm 1, \pm 2, \pm 3, \ldots) \quad (9)$$

Eq.(8) defines the zero-th order beam. Eq.(9) defines the m-th order beam. For an arbitrary $\Phi$,

$$d\sin\Phi + s\cos\Phi = (d^2+s^2)^{0.5}\sin(\Phi+\alpha). \quad (10)$$

Here $\sin\alpha = s/(d^2+s^2)^{0.5}$. Substituting the relation into Eq.(8) yields

$$n(d^2+s^2)^{0.5}\sin\alpha = (d^2+s^2)^{0.5}\sin(\Phi_0+\alpha). \quad (11)$$

The common factor $(d^2+s^2)^{0.5}$ should be eliminated. Then Eq.(11) becomes

$$n\sin\alpha = \sin(\Phi_0+\alpha). \quad (12)$$

Comparison Eq.(12) with Snell's Law $\sin(\theta+\Theta)=n\sin\Theta$ in the $\Theta$-wedge glass block implies that replacement of $\alpha=\Theta$ can equalizes a wedge DOE to a wedge block. In face, $\sin\alpha=s/(d^2+s^2)^{1/2}$. $\tan\Theta$ of the wedge angle $\Theta$ of the glass block is equal to the ratio s/d of height s to length d in a DOE. $\tan\Theta=s/d$.

The above explanation proves that the zero-th order beam should bend in a direction of $\Phi_0 =\theta$ by the DOE which is prepared by quantizing the slant into pixels of a step s and a length d which satisfy $\tan\Theta=s/d$. The zero-th order beam angle $\Phi_0$ in the wedge DOE is equal to the refraction angle $\theta$ of the wedge block of Fig.13, which gives a starting slope for making discrete steps of the wedge DOE.

What does this result mean? The bending angle of the zero-th order beam produced by a wedge DOE is entirely equal to the bending angle of light refracted by a wedge block having the same slope. What has been proved is that the zero-th order beam should be bent in a wedge DOE as shown in Fig.3(b). The zero-th order beam bends in the direction of $\Phi_0$. The m-th order beam is an assemble of rays having path differences of m times as long as a wavelength.

$$n\sin\Theta - \sin(\Phi_m+\Theta) = m\lambda/(d^2+s^2)^{0.5} \ (m=\pm 1, \pm 2, \ldots). \quad (13)$$

An increment of m causes a decrement of $\Phi_m$. A further increase of m invites negative $\Phi_m$.

$$(n-1)\sin\Theta = m\lambda/(d^2+s^2)^{0.5}. \quad (m=1,2,3,\ldots) \quad (14)$$

If there were a positive integer m satisfying Eq.(14), the straightforward rays, e.g. $W_1N_1$, $W_2N_2$ and $W_3N_3$, (m=0) would exist and would form a wavefront $N_1N_2N_3$. Since this meant $\Theta=\alpha$, $\sin\Theta$ would be $s/(d^2+s^2)^{1/2}$. Eq.(14) is reduced to

$$(n-1)s = m\lambda. \quad (m=1,2,3,\ldots) \quad (15)$$

$\lambda/(n-1)$ is a full single wavelength step. A DOE has no step height which is higher than the full single wavelength step $\lambda/(n-1)$. In any case, a step difference s is less than $\lambda/(n-1)$. There is no positive integer m. The straightforward rays, e.g. $W_1N_1$, $W_2N_2$ and $W_3N_3$, (m=0) never exist. Geometric optics is mute. Waveoptics gives us a clear solution.

The allowable range of the wedge angle $\Theta$ can be determined by the requirement that the zero-th order beam should not overlap with the diffraction beam. As mentioned before, the range of allowable $\Theta$ is represented by $\Theta \geq (\Upsilon + D/L)/(n-1)$. T is an aperture angle glancing a pattern on an image from a DOE center, and n is a refractive index of the DOE. When $\Theta$ is determined, the preceding consideration of the zero-th order beam gives $\tan\Theta = s/d$. The pixel size d is a predetermined constant. The step height difference s is determined. The full single wavelength step height is $\lambda/(n-1)$. Step height differences are conveniently quantized into w (2, 4, 8, 16, 32, 64,..., $w=2^b$). A unit step s is a quotient $\lambda/(n-1)w$ of the full single wavelength difference $\lambda(n-1)$ divided by w. $\varepsilon=\lambda/(n-1)w$.

Height differences between neighboring pixels should take one of only the w steps of $\varepsilon, 2\varepsilon, 3\varepsilon, 4\varepsilon,..., (w-1)\varepsilon$. The step differences for making a wedge desired by the present invention should also be one of the w degrees of steps of $\varepsilon, 2\varepsilon, 3\varepsilon, 4\varepsilon,..., (w-1)\varepsilon$. The neighboring step height difference s for making the desired wedge is assumed to be k times as high as the unit difference $\varepsilon(=\lambda/w(n-1))$, i.e., $s = k\varepsilon$, where k is a positive integer less than $(w-1)$ $(1 \leq k \leq (w-1))$.

$$s = k\lambda/w(n-1). \quad (16)$$

This relation gives a condition of the step height difference to neighboring pixels for making the desired wedge. The step height difference is replaced by the wedge angle $\Theta$.

$$\tan\Theta = s/d = k\lambda/dw(n-1). \quad (17)$$

The unit of step height is $\varepsilon(\varepsilon= \lambda/w(n-1))$. By replacing $\lambda/w(n-1)$ by $\varepsilon$, Eq.(17) is rewritten to

$$\tan\Theta = s/d = k\varepsilon/d. \quad (k; \text{integer}, 1 \leq k \leq w-1). \quad (18)$$

The tangent of the inclination angle $\Theta$ of a wedge DOE shall be a multiple of $\varepsilon/d$ which is a quotient of the unit step $\varepsilon$ divided by the pixel size d. The minimum of $\tan\Theta$ derives from the case of putting k=1 for making a wedge.

$$\tan\Theta \geq \varepsilon/d = \lambda/wd(n-1). \quad (19)$$

The upper limit of $\tan\Theta$ is determined by an inequality of $k/w< 1$.

$$\tan\Theta < \lambda/d(n-1). \quad (20)$$

$\lambda/(n-1)$ is a full wavelength thickness difference. Eq.(20) implies that the tangent of the wedge $\Theta$ should be

smaller than the quotient of one wavelength height $\lambda/d(n—1)$ divided by the pixel size d.

The above requirements determine the relations between the wedge angle $\Theta$, the neighboring step difference s and the multiple number k of the wedge DOE of the present invention. The continual slant of the wedge is replaced by the height difference $s = k\varepsilon$ between discrete neighboring pixels. The wedge has an effect of excluding the zero-th order beam. A convergence effect and a homogenizing effect together with the zero-th order exclusion effect shall constitute the DOE.

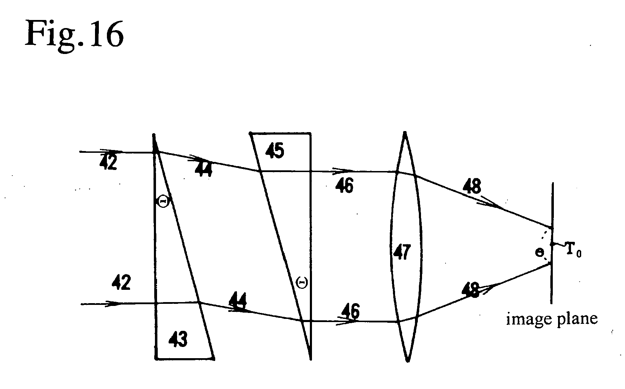

A superposition of three effects should construct the DOE. Component effects are allotted to glass blocks for clarifying the superposition for making the DOE. Fig.16 shows a set of three glass blocks having individual effects of the DOE and loci of light refracted by the glass blocks. An input beam is a parallel Gaussian distribution beam 42. The wedged glass block 43 bends the parallel Gaussian beam 42 into a slanting Gaussian beam 44 by refraction. An inverse wedge glass block 45 having a complementary wedge converts the slanting Gaussian beam 44 to a parallel homogenized beam 46. The conjugate wedge block 45 has a homogenizing effect but has no effect of refracting the zero-th order beam. The convex lens glass block 47 converges the parallel homogenized beam 46 to a shrinking homogenized beam projected on the image plane. The homogenized beam pattern has a length e on the image plane. The length e can arbitrarily be determined. The shape of the homogenized scope J is also arbitrarily determined, for example, a circle, an ellipse, a rectangle, a square and a zone, which shall be dependent upon purpose.

In fact, the wedge DOE is an assemble of three virtual components 43, 45 and 47. Intermediate beams 44 and 46 are non-existing, imaginary rays. The components are virtual imaginary parts which facilitate to understand the function by intuition.

The rear surface (or the front surface) inclines at $\Theta$. A beam 44 inclines. Reversing the inclining beam to a horizontal beam requires a complementary, imaginary glass block 45. The complementary glass block 45 should be quantized into a discrete stepping DOE. The wedge block 45 should have discrete steps having a common height difference $s=k\lambda/w(n—1)$. The steps form a sawtooth structure on the rear surface (or front surface) of the block 45.

The third virtual component following the wedge glass block 45 is an aspherical lens 47 which has a homogenizing effect and a converging effect like a Fresnel lens. The virtual aspherical lens 47 produces a homogenized and reduced beam 48 on the image plane. The virtual aspherical lens 47 is a kind of convex lens, since the lens has convergence. The imaginary aspherical lens 47 has a flattened central part since the lens has a homogenizing function. The virtual aspherical lens should be replaced by a planar lens making use of diffraction instead of refraction. An equivalent planar lens should have a sawtooth surface which shall be produced by repeatedly subtracting a wavelength unit height $\lambda/(n—1)$ from the surface height till the resultant height is reduced below $\lambda/(n—1)$. The convex surface shall be replaced by a sawtooth-like surface by the repetitions of subtraction. The imaginary aspherical lens should be reduced to a sawtooth-surfaced planar element. Among three imaginary components, the wedge glass block 43 is employed as a shape of the wedge DOE. The virtual complementary wedge block 45 and the virtual aspherical lens 47 should be planar elements having sawtooth surfaces determined by the discrete step functions.

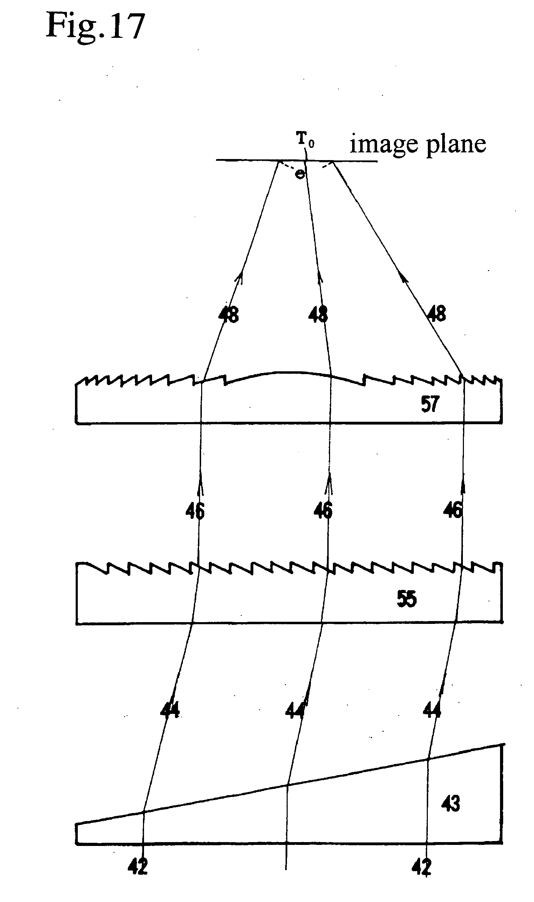

Fig.17 demonstrates two sawtooth-surfaced components replacing two original components of Fig.16. The direction of Fig. 17 is rotated at 90 degrees from the posture of Fig.16 for showing upward beams. The wedge glass block 43 allots an outline of a wedge DOE of the present invention. A sawtoothed block 55 is a discrete planar element prepared by quantizing the inverse-glass block 45 in Fig.16. A Fresnel-lens like a planar glass block 57 is a concentric step lens which is prepared by quantizing the aspherical lens 47 in Fig.16.

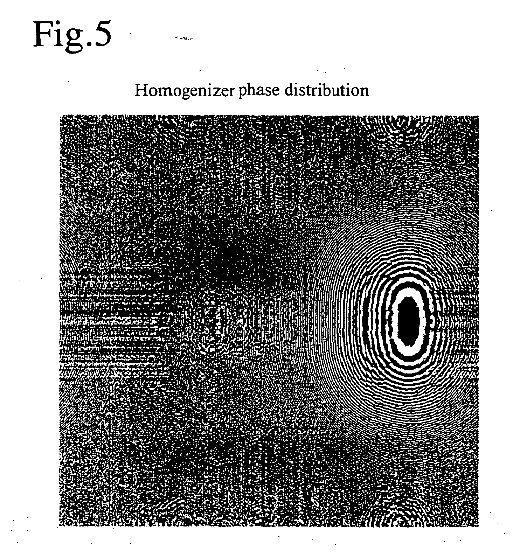

An outline shape of the DOE of the present invention shall be determined exclusively by the first glass block 43. Superficial sawtooth-like shapes of the DOE shall be determined by a superposition of the zigzag surfaces of the sawtooth and Fresnel blocks 55 and 57. A superposition of the wedge block 43 and the concentric Fresnel block 57 makes another concentric Fresnel pattern diverting the concentric center to the left. The saw-tooth component 55 gives parallel narrow grooves. The DOE pattern of Fig.5 can be interpreted as a synthesized, superposed pattern of three blocks 43, 55 and 57.

With reference to Fig.15, it has been proved that the zero-th order beam which passes a wedge DOE should make its way in a slanting direction at $\Phi_0$. However, what progresses in the $\Phi_0$ direction is only the central rays along with the central axis. The zero-th order beam, which includes peripheral components of rays, has a definite width aperture around $\Phi_0$ direction. The definite aperture of the zero-th order beam should be estimated. A simple equation, for example, Bragg diffraction equation, $d\sin\theta=\lambda$, determines the main direction of diffraction. In fact, a diffraction beam has a definite width. The diffraction width is represented by a sinc function $\sin\theta/\theta$. Consideration, which is based upon the wavefronts formed by diffraction beams from corresponding points on all pixels, only determines a diffraction direction but gives no hint of the width (Fig.15). There is other diffraction mode composed of superposition of diffracted rays from non-corresponding points. Superposition of rays emitted from the non-corresponding points allocates the diffraction beam with a definite aperture (width).

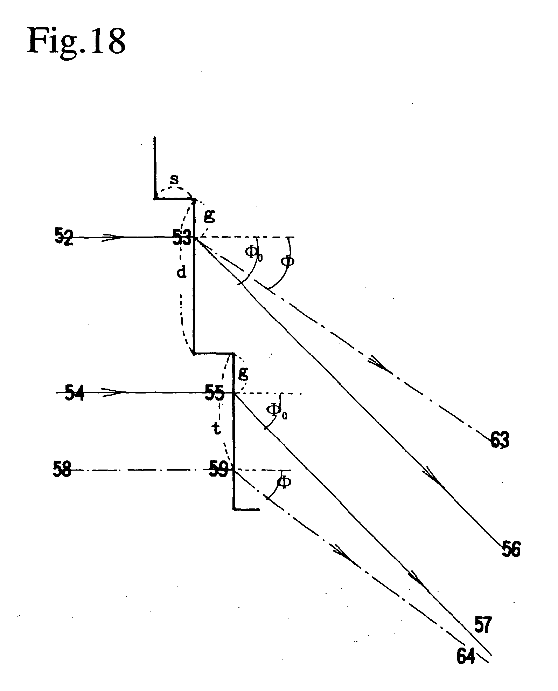

Fig. 18 shows two step pixels of a wedge DOE with non-corresponding points emanating rays in a slanting direction of $\Phi$ for considering the aperture (blurring) of zero-th order rays. Two neighboring steps are taken into account. It is sufficient for considering the minimum of bending angles. An upper ray passes at point 52, goes out at point 53,

bends downward at $\Phi_0$ (solid line) and progresses via point 56 in Fig.18. A lower ray passes at point 54, goes out at point 55, bends downward at $\Phi_0$ (solid line) and progresses via point 57. Two rays 52-53-56 and 54-55-57 have no path difference and yield no width. Points 53 and 55, which are distanced by "g" from the edge ($0 \leqq g < d$), are corresponding points. These rays are central components of the zero-th order beam. Point 59, which is distanced by "t" from the edge ($0 \leqq t < d$), is a non-corresponding point to point 53.

Another upper ray passes at point 52, goes out at point 53, bends downward at $\Phi$ (dotted line) and progresses via point 63 in Fig.18. Another lower ray passes at point 58, goes out at point 59, bends downward at $\Phi$ (dotted line) and progresses via point 64. Two non-corresponding rays 52-53-63 and 58-59-64 have no path difference and yield a width of zero-th order rays. A horizontal component of a distance between points 53 and 59 is s. A vertical component of the distance between points 53 and 59 is $(d+t-g)$. A path difference between rays 58-59-64 and 52-53-63 is ns—$\{(d+t-g)\sin\Phi + s\cos\Phi\}$. Since two rays make a zero-th order component, the path length difference should be 0.

$$ns - \{(d+t-g)\sin\Phi + s\cos\Phi\} = 0. \quad (21)$$

When $(d+t-g)$ is equal to d ($t=g$), $\Phi_0 = \theta = \sin^{-1}(n\sin\Theta) - \Theta$. When $(d+t-g)$ is smaller than d ($t<g$), $\Phi$ is larger than $\Phi_0$ ($\Phi > \Phi_0$). The minimum of $(d+t-g)$ is 0. When $(d+t-g)$ is 0, $\Phi$ extinguishes. The inequality $\Phi > \Phi_0$ means that the zero-th order beam bends larger than $\Phi_0$. The zero-th order beam separates further from the diffraction beam. Thus $\Phi > \Phi_0$ causes no problem (Fig.18).

When $(d+t-g)$ is larger than d ($t>g$), $\Phi$ is smaller than $\Phi_0$ ($\Phi < \Phi_0$). Smaller $\Phi$ brings noise rays closer to the diffraction beam formed along the beam axis. Small $\Phi$ invites the probability of interference of (zero-th order) noise rays with the diffraction beam. How far are noise rays approaching the diffraction beam? What is the minimum of $\Phi$? This is a problem. The maximum of $(d+t-g)$ is 2d (when $t=d$ and $g=0$). When $d+t-g=2d$, $t=d$ and $g=0$, $\Phi$ takes the minimum value $\Phi_{min}$. Analytical, exact calculation of the minimum $\Phi_{min}$ is difficult. Approximate calculation yields,

$$\Phi_{min} = \Phi_0/2. \quad (22)$$

An inner, axis-nearest, minimum bending angle $\Phi_{min}$ is about a half $\Phi_0/2$ ($=\theta/2$) of the zero-th order center angle $\Phi_0$ ($=\theta$).

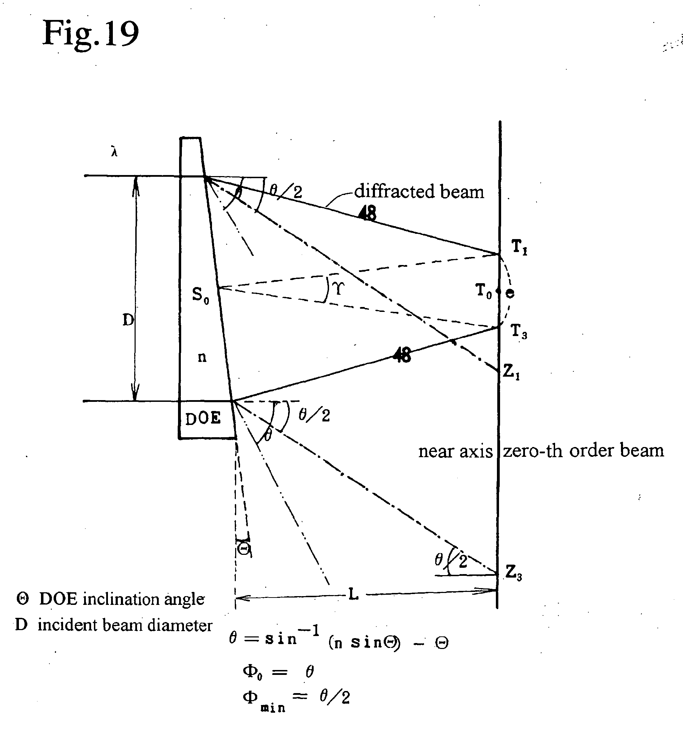

In order to prevent the zero-th order beam from overlapping with the diffraction beam, the breadth of the diffracted beam should be confined within a space of an angle smaller than a half ($\Phi_0/2$) of the bend ($\Phi$) of the zero-th order beam. The condition ensures no overlapping of the zero-th order beam with the diffraction beam. No overlapping invites no interference between the zero-th order beam and the diffraction beam. Fig. 19 shows a diffraction beam (solid lines) 48 and a zero-th order beam (dotted lines) between a wedge DOE and an image plane. The DOE diffracts an incident beam with a diameter D and a wavelength $\lambda$. A diffracted beam 48 makes a uniform power density light pattern $T_1T_0T_3$ of a width "e" on the image. $T_0$ is the center of the uniform power density pattern on the image. $T_1$ and $T_3$ are ends of the uniform power density pattern. The diffracted beam widens from the center $T_0$ by e/2 ($=T_0T_3$ or $=T_0T_1$). An aperture angle viewing the uniform density pattern $T_1T_3$ from the DOE is denoted by T. T and e are connected by a relation $2L\tan(T/2) = e$. Since the distance L from the DOE to the image is large in comparison to e, the relation is simplified to an approximate expression

$$L\Upsilon = e. \quad (23)$$

The central component of the zero-th order beam is strongly bent in a direction (double dotted line) of $\Phi_0=\theta$. But an upper peripheral component of the zero-th order beam is only bent by (single-dotted lines) $\Phi_{min}(=\theta/2)$. The zero-th order beam emanates from all the incident beam with a diameter D. The upper peripheral components of the minimum bending $\Phi_{min}$ are projected all on $Z_1Z_3$ of the image (Fig.19). The central component (double dotted line) of the zero-th order beam lies farther below $Z_1Z_3$. The central component of noise can be taken out of consideration. An image coordinate is defined by taking $T_0$ as an origin. The diffraction beam occupies a central range from $T_1 = + T L/2$ to $T_3 = -T L/2$. The position $Z_1$ of the uppermost of the peripheral rays emanating from the upper edge of the DOE is $Z_1=-L\theta/2 + D/2$, where D is a diameter of the incident beam and $\theta$ is a bending angle of the zero-th order beam. If $Z_1$ is below $T_3$ ($Z_1 < T_3$: $-L\theta/2 + D/2 \leqq -\Upsilon L/2$), the zero-th order beam does not overlap with the diffracted beam and interference does not occur. The condition of non-overlapping is denoted by

$$\Upsilon L/2 \leqq L\theta/2 - D/2. \quad (24)$$

Namely, exclusion of the zero-th order beam out of the diffraction beam requires the following inequality

$$\Upsilon L + D \leqq L\theta. \quad (25)$$

Substitution of $\theta = \sin^{-1}(n\sin\Theta) - \Theta$ into (25) yields,

$$\Upsilon L + D \leqq L\{\sin^{-1}(n\sin\Theta) - \Theta\}. \quad (26)$$

Dividing (26) by L leads to

$$\Upsilon + (D/L) \leqq \{\sin^{-1}(n\sin\Theta) - \Theta\}. \quad (27)$$

This is a precise expression of the condition of excluding the zero-th order beam. When $\Theta$ is small enough,

$$(n-1)\Theta < \{\sin^{-1}(n\sin\Theta) - \Theta\}. \quad (28)$$

Inequality (27) can be reduced to a simplified approximate expression

$$\Upsilon + (D/L) \leqq (n-1)\Theta. \quad (29)$$

Eq.(29) is a sufficient condition of excluding the zero-th order beam for a wedge DOE. Otherwise, non-interference condition can be written by

$$\Theta \geqq \{\Upsilon + (D/L)\}/(n-1). \quad (30)$$

This inequality teaches us that the minimum of the wedge angle $\Theta$ is $\{\Upsilon + (D/L)\}/(n-1)$, where L is the distance between the DOE and the image, D is an incident beam diameter, T is an aperture angle of the diffraction pattern on the image viewing from the DOE center and n is a refractive index of the DOE.

Examples of the invention will be described with reference to the several figures of the accompanying drawings in which:

Fig. 1 is a schematic view of a conventional DOE beam homogenizer optical system which converts a Gaussian power distribution laser beam into a uniform power density beam by a parallel planar diffractive optical element (DOE).

Fig.2 is an explanatory view of a conventional DOE beam homogenizer optical system for clarifying that step errors of a DOE cause the zero-th order beam occurrence and invite interference between the diffracted rays and the zero-th order beam.

Fig.3(a) is a schematic view of a wedged DOE beam homogenizer optical system of the present invention without step error for diffracting a gaussian beam into a uniform power distribution beam on an image plane.

Fig.3(b) is a schematic view of a wedged DOE beam homogenizer optical system of the present invention with step errors for clarifying separated paths of the diffraction beam and the zero-th order beam and no occurrence of interference between the diffracted rays and the zero-th order beam caused by the step errors.

Fig.4 is an explanatory figure for calculating the wedge angle $\Theta$ of the DOE of Embodiment 1 of the present invention.

Fig.5 is a plan view of phase distribution of the DOE without step error of Embodiment 1 of the present invention. One fringe denotes a change of one wavelength.

Fig.6 is beam power distribution on an image plane diffracted by the DOE without step error of Embodiment 1 of the present invention.

Fig.7 is a graph of on-x-axis beam power distribution and another graph of on-y-axis beam power distribution on an image plane diffracted by the DOE without step error of Embodiment 1 of the present invention.

Fig.8 is beam power distribution on an image plane diffracted by the DOE including step errors of Embodiment 1 of the present invention.

Fig.9 is a graph of on-x-axis beam power distribution and another graph of on-y-axis beam power distribution on an image plane diffracted by the DOE including step errors of Embodiment 1 of the present invention.

Fig.10 is a plan view of phase distribution of a conventional parallel planar DOE without step error. One fringe denotes a change of one wavelength.

Fig.11 is a graph of on-x-axis beam power distribution and another graph of on-y-axis beam power distribution on an image plane diffracted by the conventional parallel planar DOE without step error.

Fig.12 is a graph of on-x-axis beam power distribution and another graph of on-y-axis beam power distribution on an image plane diffracted by the conventional parallel planar DOE with step errors.

Fig.13 is an explanatory figure for showing a parallel beam being refracted by a wedge shaped DOE with $\Theta$ inclining surfaces in a direction inclining at $\theta$ to the axis.

Fig. 14 is an explanatory figure of a wedge-like stepped glass block which is prepared by quantizing a continual slanting wall of the wedge shaped DOE into a DOE composed of pixels with different flat step heights for denoting a question that a parallel incident beam would straightly pass the stepped glass block without refraction and would become a zero-th order beam.

Fig.15 is an explanatory figure showing several wavefronts of rays started from equivalent points on a series of pixels with a width d, a step height difference $s=d\tan\Theta$, where $\Theta$ is the inclination angle of the starting wedge-like glass block of Fig. 13. A set of rays which have no light path length difference between the rays starting from neighboring steps at the same wavefront is called a zero-th order beam. Another set of rays which have a light path length difference m times as long as a wavelength between the rays starting from neighboring steps at the same wavefront is called an m-th order (diffracted) beam.

Fig.16 shows beam loci formed by three virtual glass blocks, a slanting block, an inverse-slanting block and a convex lens block, which are assumed to bear three functions of the wedge-shaped DOE of the present invention for making a reduced uniform power distribution beam.

Fig. 17 shows beam loci formed by three optical parts prepared by leaving the first slanting block untouched, quantizing the second inverse-slanting block to a saw-edge planar block composed of parallel segments of a single wavelength height difference and quantizing the convex lens block to a saw-edge planar block composed of circular segments of a single wavelength height difference, which are assumed to bear three functions of the wedge-shaped DOE of the present invention for making a reduced uniform power distribution beam. Insight teaches us that superposition of the three elements will make a fringe pattern which can be identified to Fig.5.

Fig.18 is an explanatory figure of ray loci diffracted by a slanting series of steps with a step height s and a width d for demonstrating that rays starting from corresponding spots on different steps are directed in the zero-th order beam of an angle $\Phi_0$ ($=\theta_0$) without path difference but rays starting from non-corresponding spots on different steps are directed in the zero-th order beam of an angle $\Phi$ without path difference and the minimum $\Phi_{min}$ of $\Phi$ is about a half of $\Phi_0$.

Fig.19 is an explanatory figure of loci of rays diffracted by a wedge-shape DOE for demonstrating that non-overlapping of the diffracted beam with the zero-th order beam shall require T L+D≦Lθ, because the divergence of rays starting from non-equivalent spots is within $\theta/2$ and T is the aperture of rays diffracted from the DOE.

Fig.20(a) is a vertical sectional view of Embodiment 2 consisting of a parallel planar DOE and a wedged DOE without step error for diffracting a Gaussian laser beam into a uniform-power distribution beam without the zero-th order beam onto an image plane.

Fig.20(b) is a vertical sectional view of Embodiment 2 consisting of a parallel planar DOE and a wedged block with step errors for diffracting a Gaussian laser beam into a uniform-power distribution beam without interference between the diffracted beam and the zero-th order beam onto an image plane.

Fig.21(a) is a vertical sectional view of a planar DOE of Embodiment 2 for showing a DOE-diffracted beam emanating upward in a direction inclining at $\alpha$ to the axis.

Fig.21 (b) is a vertical sectional view of Embodiment 2 composed of a planar DOE and a wedge block for showing a diffracted/refracted beam emanating just along the axis and the zero-th order beam going downward in a direction inclining at $\theta$.

Fig.21 (c) is a vertical sectional view of Embodiment 2 composed of a planar DOE and a wedge block for showing refraction of the diffracted beam and the zero-th order beam in the wedge block.

Fig.22 is a plan view of phase distribution of the DOE without step error prepared by Embodiment 2 of the present invention. A fringe denotes a phase difference corresponding to a single wavelength path difference.

Fig.23 is plan view of beam power distribution on an image plane diffracted by the DOE without step error prepared by Embodiment 2 of the present invention. A fringe denotes a phase difference corresponding to a single wavelength path difference.

Fig.24 is a graph of on-x-axis power distribution and another graph of on-y-axis power distribution on the image plane diffracted by the DOE without step error prepared by Embodiment 2 of the present invention.

Fig.25 is a plan view of beam power distribution on an image plane diffracted by the DOE with step errors prepared by Embodiment 2 of the present invention. A fringe denotes a phase difference corresponding to a single wavelength path difference.

Fig.26 is a graph of on-x-axis power distribution and another graph of on-y-axis power distribution on the image plane diffracted by the DOE with step errors prepared by Embodiment 2 of the present invention.

[EMBODIMENT1 (YAG-SHG laser; f=200mm, $2\varphi \rightarrow 0.5 \times 1mm$ ; Figs. 4, 5, 6, 7,8 and 9) ]

The light source is a YAG-SHG (Second Harmonic Generation) laser with a beam diameter $2\varphi=2mm$ having a Gaussian power distribution. The purpose of the wedge DOE system is to produce a uniform-power distribution beam of a rectangle section of 0.5mm×1mm on an image plane distanced by 200mm from the DOE. Main properties of the optical system are;

| | | |
|---|---|---|
| Light source laser: | YAG-SHG laser | |
| Wavelength: | 532nm | |
| Beam diameter: | $\varphi$2mm (at $1/e^2$) | |
| Wavefront: | Flat (=Plane Wave) | |
| DOE refractive index | | n=1.460706 |
| Focal length (DOE/Image distance) | | L= 200mm |
| Beam profile on image | 0.5mm×1mm (rectangle section; uniform power) | |

Fig.4 shows a DOE, a beam diffracted by the DOE, and a zero-th order beam of Embodiment 1. The DOE inclines in the y-direction. The y-direction size of the pattern is e=1mm. The distance between the DOE and the image plane is L=200mm. Thus $\Upsilon$L=1mm and D=2mm. The condition of separation of the zero-th order beam and the diffraction beam is T L+ D<L$\theta$. The critical condition is expressed by T L+ D = L$\theta$. The critical condition is considered now. In this example, TL+ D=1mm+2mm=3mm. L$\theta$=3mm gives the critical condition for $\theta$.

In Fig.4, the diffraction beam locus is RST and the zero-th order beam locus is RSZ. The distance ZT between the diffraction beam and the zero-th order beam on the image plane is assumed to be 3mm. $\angle$ ZST=$\theta$.

$$\theta= \tan^{-1}(3/200) = 0.014999rad = 0.859372°$$

A wedge angle of the DOE is denoted by $\Theta$. The front surface of the DOE is perpendicular to the beam axis RS. The rear surface of the DOE inclines to the axis at (90—$\Theta$). At the rear surface, the diffraction angle $\theta$ and wedge angle $\Theta$ satisfy the following relation determined by Snell's Law.

$$\sin (\theta+\Theta) = n\sin\Theta.$$

Since n and $\theta$ have been determined above, the minimum wedge angle $\Theta$ is calculated to

$$\Theta= 0.032536rad = 1.864153°.$$

This is the critical (minimum) wedge angle $\Theta$c of the DOE. This is a small angle. Endowment of a wedge angle more than $\Theta$c to the DOE eliminates overlapping of the diffraction beam with the zero-th order beam on the image plane.

In the example, the beam breadth is 2mm, the broadness of the diffraction beam is 1mm and the deviation of the zero-th order beam is 3mm on the image plane. There is no interference between the diffraction beam and the zero-th order beam. In practice, the DOE of the present invention should be assigned with a wedge angle more than the critical value Θc (in this example, 1.864153 degrees).

Properties of DOE

| | | |
|---|---|---|
| number of step heights: | 16 steps | |
| pixel size: | 5μm×5μm | |
| pixel number: | 2000 pixels × 2000pixels | |

The pixel size is d=5μm and the pixel number in x- and y- directions is M = N = 2000 and MN = 4000000. The effective area of the DOE is Md×Nd=10mm×10mm.
Fig.5 shows phase distribution φ(u,v) (step height distribution h(u, v)) of pixels (u,v) of the wedged homogenizer DOE without step error of Embodiment 1. One fringe means a light path length difference of one wavelength (in this case, 532nm). One fringe corresponds to a λ/(n—1) thickness change, a single wavelength λ variation and a 2π phase change. Since λ=532nm and n=1.46070, the height of a wavelength change is λ/(n—1)=1154.8nm. Since pixels take one of sixteen steps (w=16, w=2$^b$, b=4), the unit height is ε= 1307nm/16 = 72.2nm. An average of height differences between neighboring pixels is s=dtanΘ=162.7nm. Heights of pixels (u,v) from the base of φ(u,v)=0 is denoted by h(u,v). φ(u,v) is related to h(u,v) by an equation.

$$\varphi(u,v) = 2\pi h(u, v)(n-1)/\lambda.$$

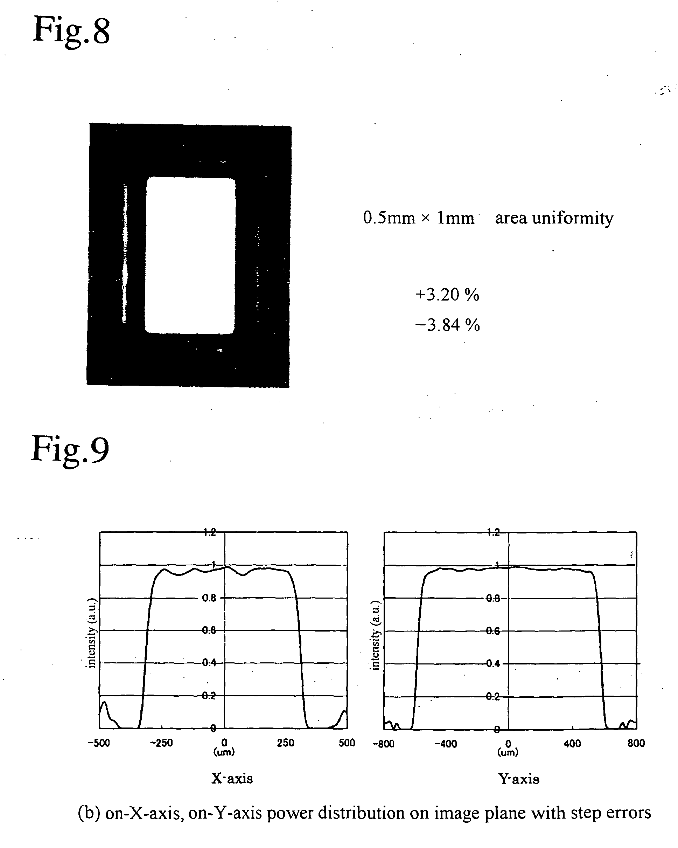

The phase distribution φ(u,v) shown in Fig.5 can be otherwise identified to the thickness distribution h(u, v) of pixels in the DOE. The DOE has another function of converging beam power in addition to the function of homogenizing the Gaussian power density beam into a uniform power density beam. Concentric ellipse phase distribution is produced by the convergency like a Fresnel lens. The center of the concentric ellipses deviates rightward in Fig.5. The rightward deviation results from the wedge. Concentric ellipse fringes expand from the ellipse center. Analogy of a Fresnel lens gives us intuitive understanding of the convergence function. The reason why concentric ellipses are formed is that the object uniform power region is a rectangle of 0.5mm×1mm on the image plane.

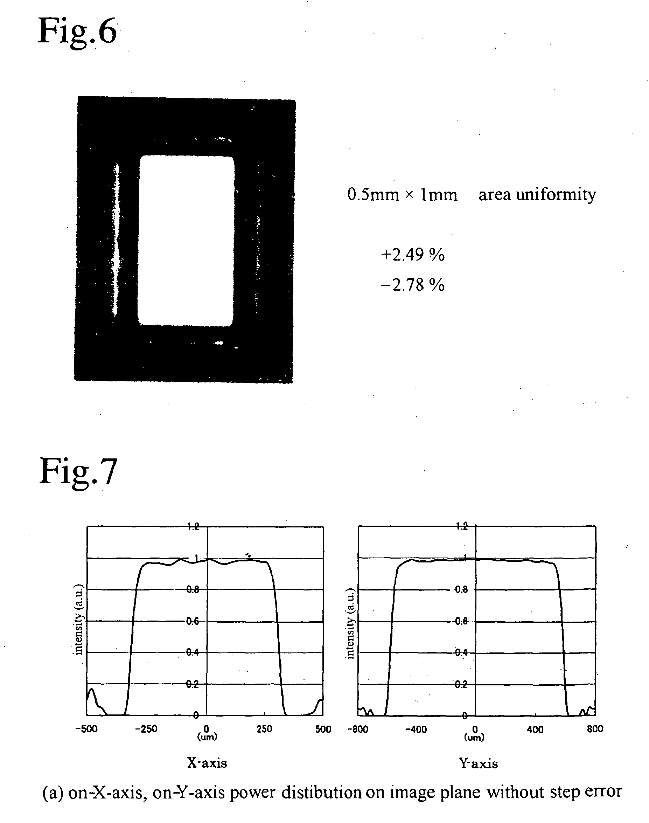

Fig. 6 is an on-image projection of a rectangle-sectioned beam prepared by converting a 2mmφ Gaussian laser beam into a rectangle sectioned uniform power beam by the wedge DOE of Embodiment 1. A blank part denotes the 0.5mm×1mm rectangle on the image. Even eye-sight can confirm uniform power within the region. The power fluctuation is +2.49% to —2.78% in the 0.5mm×1mm rectangle.
Fig.7 is a graph (left) of on-x-axis power distribution and a graph (right) of on-y-axis power distribution of the beam diffracted on the image plane by the non step-error wedge DOE. The power density on the x-axis is nearly uniform between x = —250μm and x = +250μm. The on-y-axis power distribution of the right of Fig.7 reveals uniformity between y = —500μm and y = +500μm. The non step-error wedge DOE achieves the object in producing uniform power density in a 0.5mm×1.0mm rectangle on the image plane.
Next, another wedged DOE with step errors having properties similar to the above DOE is produced for examining degradation of power uniformity. A plan view of the step-error allotted DOE quite resembles to the above non-step-error. Human eye-sight cannot discriminate the difference between the non-step-error wedge DOE (Fig.5) and the step-error-allotted Wedge DOE. Thus a figure of the step-error-allotted wedge DOE is omitted.
In Embodiment 2, the step-error-allotted DOE converts the Gaussian power distribution laser beam into a rectangle uniform power distribution beam on the image plane on the same condition as the non-step-error DOE. Fig.8 shows the power distribution diffracted by the step-error-allotted DOE on the image plane. Eye-sight observation cannot detect power fluctuation. The power fluctuation is +3.20% to -3.84 %. The power distribution is sufficiently quasi-uniform.
Fig.9 is a graph (left) of on-x-axis power distribution and a graph (right) of on-y-axis power distribution of the beam diffracted on the image plane by the step-error-allotted DOE. The power density is nearly uniform (0.95-1.0) between x = -250μm and x = +250μm with little fluctuation. Small drops appear at the same spots as the on-x-axis power distribution of Fig. 7. The small drops of power are not caused by the interference between the zero-th order beam and the diffracted beam. The on-y-axis power distribution of the right of Fig.9 reveals excellent uniformity between y = —500μm and y =+500μm.

The wedge-type DOE of the present invention has an advantage of minimizing the degradation of the power uniformity induced by manufacturing errors.

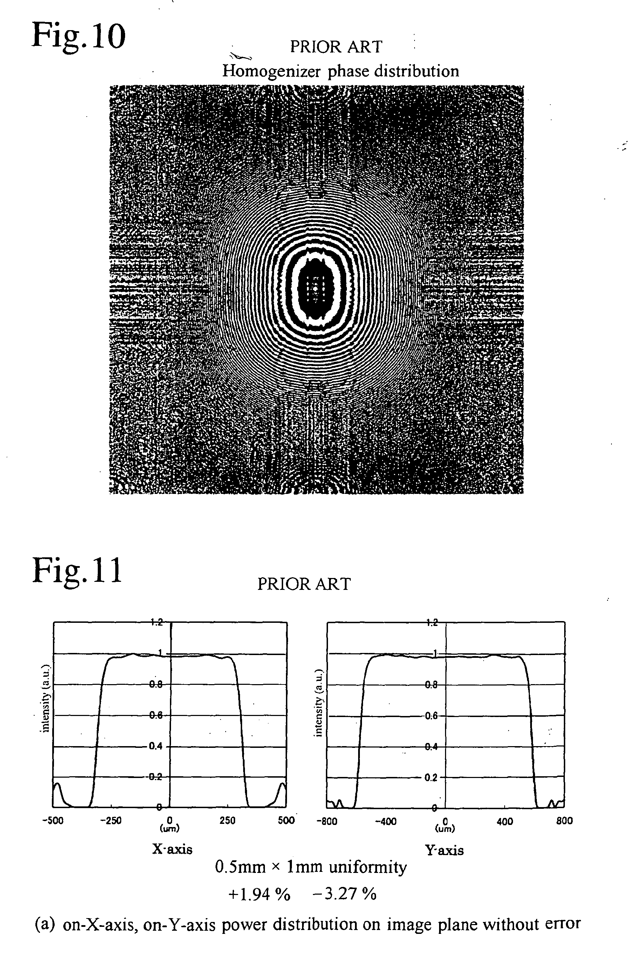

[COMPARISON EXAMPLE 1 (YAG-SHG laser; f=200mm, 2φ→0.5 X 1mm; Figs.10, 11 and 12)]

A parallel planar DOE (non-error Comparison Example: Fig.11) without step error and a parallel planar DOE (error-allotted Comparison Example: Fig.12) with step errors are made for comparing the planar DOEs with the wedged DOEs of the present invention. DOE sizes, pixel sizes and laser properties are similar to Embodiment 1.

| | |
|---|---|
| Light source laser: | YAG-SHG laser |
| Wavelength: | 532nm |
| Beam diameter: | φ2mm (at $1/e^2$) |
| Wavefront: | Flat (=Plane Wave) |
| DOE refractive index: | n=1.460706 |
| Focal length (DOE/Image distance): | L= 200mm |
| Image Pattern: | 0.5mm×1mm (uniform power; rectangle section) |

Properties of DOE

| | |
|---|---|
| number of steps: | 16 steps |
| pixel size: | 5μm×5μm |

| | |
|---|---|
| pixel number: | 2000 pixels× 2000pixels |

Fig.10 is a plan view of a parallel planar DOE made by the properties mentioned above as a comparison example. The DOE has a convergence effect. Plenty of concentric ellipses appear at the center. Like a Fresnel lens, the concentric ellipses play the role of convergence. Since the DOE is composed of parallel surfaces, the center of the concentric ellipses coincides with the center of the DOE. The phase distribution is symmetric in a parallel plane DOE. The reason why many ellipses appear instead of circles is that the object pattern on the image is a rectangle of 0.5mm×1mm.

Fig.11 is a graph (left) of on-x-axis power distribution and a graph (right) of on-y-axis power distribution of the beam diffracted on the image plane by the parallel planar non-step-error DOE. The power density is quasi-uniform. The object pattern should have a 0.5mm breadth in the x-direction. The power density on the x-axis is nearly uniform between x = -250μm and x = +250μm. The power density on the y-axis is nearly uniform between x = —500μm and x = +500μm. The power is uniform in the rectangle of 0.5mm×1.0mm on the image plane. Nonuniformity is +1.94% to -3.27%.

Next, another parallel planar DOE with step errors having the properties similar to the above DOE is produced. A plan view of the parallel planar step-error allotted DOE resembles to the above parallel planar non-step-error DOE (Fig.10). Human eye-sight cannot discriminate the difference between the non-step-error planar DOE (Fig.10) and the step-error-allotted planar DOE. The fringe pattern figure of the step-error-allotted parallel planar DOE is omitted.

Fig.12 is a graph (left) of on-x-axis power distribution and a graph (right) of on-y-axis power distribution of the beam diffracted on the image plane by the parallel planar step-error-allotted DOE. The power density on the x-axis fluctuates in a range of 0.85 to 0.93 between x = — 250μm and x = +250μm. Power fall and power fluctuation on the x-axis are larger than the non-step-error parallel planar DOE of Fig.11.

The power density on the y-axis fluctuates in a range of 0.85 to 1.0 between x = —500μm and x = +500μm. Power fall and power fluctuation on the y-axis are larger than the non-step-error parallel planar DOE of Fig.11. Step errors cause a large perturbation of power density on parallel planar DOEs. Comparison of Fig.9 (Embodiment 1) and Fig.12 (Comparison Example 1) confirms that the wedge DOE enables the present invention to avoid bad influence, e.g., power fall and fluctuation, caused by step height errors. The wedge DOE of the present invention is endowed with high resistance against the step errors.

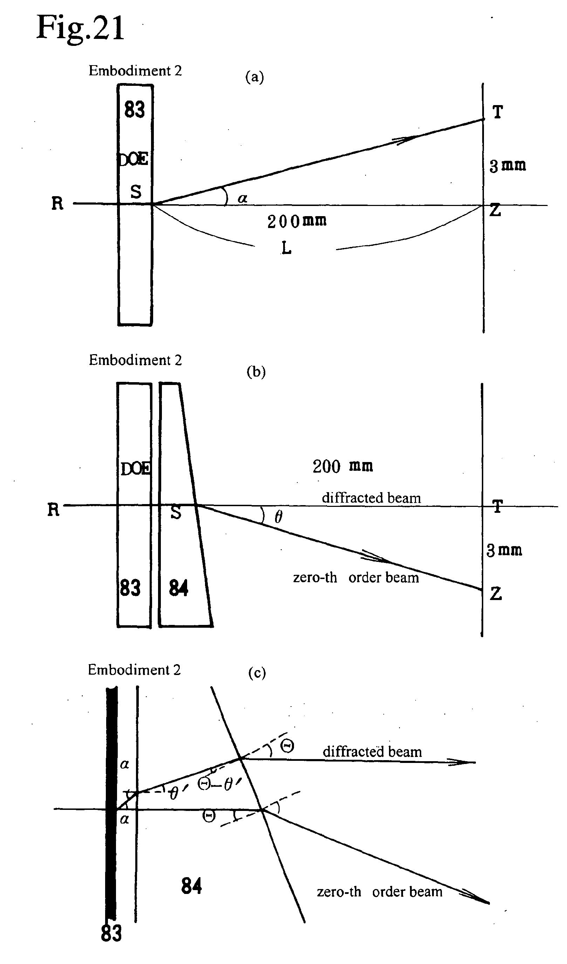

[EMBODIMENT 2 (YAG-SHG laser; f=200mm, 2φ→0.5 × 1mm; Figs. 21, 22, 23, 24, and 25)]

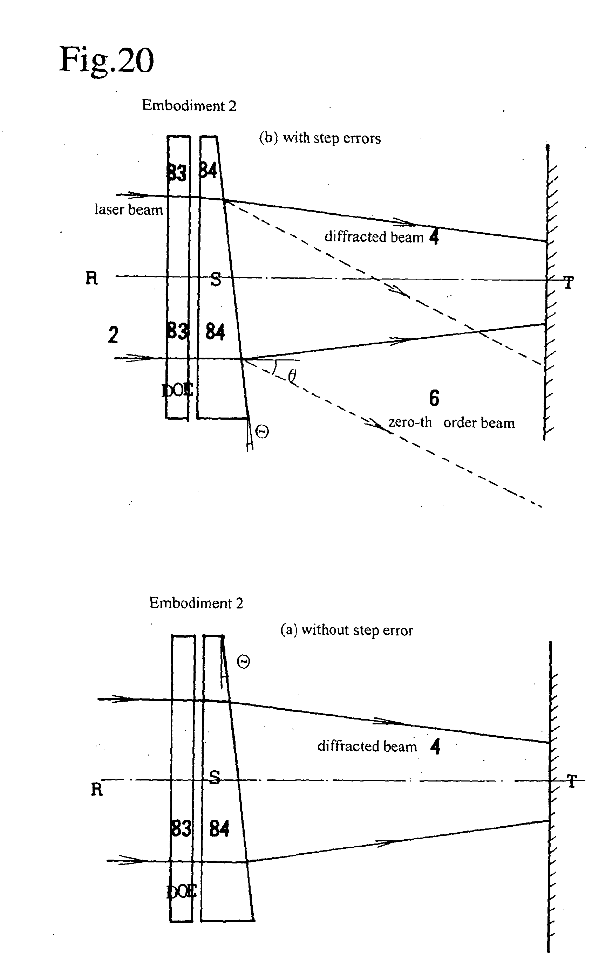

The wedge DOE can be replaced by a couple of a wedge glass block and a parallel planar DOE in the present invention. The couple of the wedge glass block and the parallel planar DOE is equivalent to a wedge DOE. Fig. 20(a) shows a configuration of Embodiment 2. A wide Gaussian laser beam 2 passes a parallel planar DOE 83 and a wedge glass block 84. The planar DOE 83 diffracts the laser beam into a diffracted beam 4 and makes an reduced uniform pattern T on an image plane. Step height errors shown by Fig.20(b) make a zero-th order beam 6. The glass block 84 refracts the diffracted beam 4 on the image plane and refracts the zero-th order beam 6 outward in a slanting direction. The diffracted beam 4 and the zero-th order beam 6 are separated on the image plane. The purpose of Embodiment 2 is to convert a 2mmφ Gaussian beam of a YAG-SHG laser to a uniform power distribution 0.5mm × 1mm rectangle beam on the image plane distanced by 200mm from the DOE by a set of a planar DOE and a wedge glass block. The light source is common with Embodiment 1.

| | | |
|---|---|---|
| Light source laser: | | YAG-SHG laser |
| Wavelength: | | 532nm |
| Beam diameter: | | φ2mm (at $1/e^2$) |
| Wavefront: | | Flat (=Plane Wave) |
| DOE | refractive index: | n=1.460706 |
| | Focal length (DOE/Image distance): | L= 200mm |
| | Beam profile on image: | 0.5mm×1mm (rectangle section; uniform power) |

Fig.20(a) and Fig.20(b) show a DOE, a beam diffracted by the DOE, and a zero-th order beam of Embodiment 2. Fig.20(a) denotes a non-step error case without zero-th order beam. Fig.20(b) denotes a step error allotted case with a zero-th order beam directing in a downward slanting direction. The DOE inclines in the y-direction. The laser beam diameter is D=2mm and the y-direction size of the pattern is e=1mm, similarly to Embodiment 1. The distance between the DOE and the image plane is L=200mm. Thus ϒL=1mm and D=2mm gives a critical condition Lθ=3mm. The condition of separation of the zero-th order beam and the diffraction beam is T L+ D<Lθ. The critical condition is expressed by T L+ D = Lθ. The critical condition is considered now. In this example, T L+ D=1mm+2mm=3mm. Lθ=3mm gives the critical condition for θ.

In Fig.21 (a), a diffraction beam locus RST diffracted by the DOE 83 inclines at $\alpha$ upward. But the zero-th order beam locus RSZ expands straightly along the axis. The distance ZT between the diffraction beam and the zero-th order beam on the image plane is assumed to be 3mm. ∠ ZST=α.

$$\alpha = \tan^{-1}(3/200) \fallingdotseq 0.014999 \text{rad} = 0.859372°$$

A wedge angle of the wedge glass block 84 is denoted by Θ. The above parameters prevent the zero-th order beam from overlapping the diffracted beam on the image plane. A beam emanating slantingly at $\alpha$ from the DOE 83 goes at an angle θ' in the glass block 84. Snell law requires sinα = nsinθ' at an input boundary. The beam goes out of the glass block 84 at an angle (Θ —θ') from the rear surface. The diffracted beam should be parallel to the axis. Since the wedge angle is Θ, the diffraction beam inclines at Θ to a normal on the rear surface. Snell law requires sinΘ = n sin (Θ—θ').

$$\theta' = 0.5883° = 0.01027 \text{ rad.}$$

$$\Theta = 0.0325 \text{rad} = 1.864 °.$$

This is the critical wedge angle Θc of the glass block 84. This is a small angle. Endowment of the wedge angle to the glass block eliminates overlapping of the diffraction beam with the zero-th order beam on the image plane. The beam breadth is 2mm, broadness of the diffraction beam is 1mm and the deviation of the zero-th order beam is 3mm on the image plane. There is no interference between the diffraction beam and the zero-th order beam. In practice, the glass block of Embodiment 2 should be assigned with a wedge angle more than the critical value Θc (in this example, 1.864153 degrees).

Properties of DOE

| number of steps: | 16 steps |
| pixel size: | $5\mu m \times 5\mu m$ |
| pixel number: | 2000 pixels $\times$ 2000 pixels |

The pixel size is d=$5\mu m$ and the pixel number in x- and y- directions is M = N = 2000 and MN = 4000000. The effective area of the DOE is Md$\times$Nd=10mm$\times$10mm.

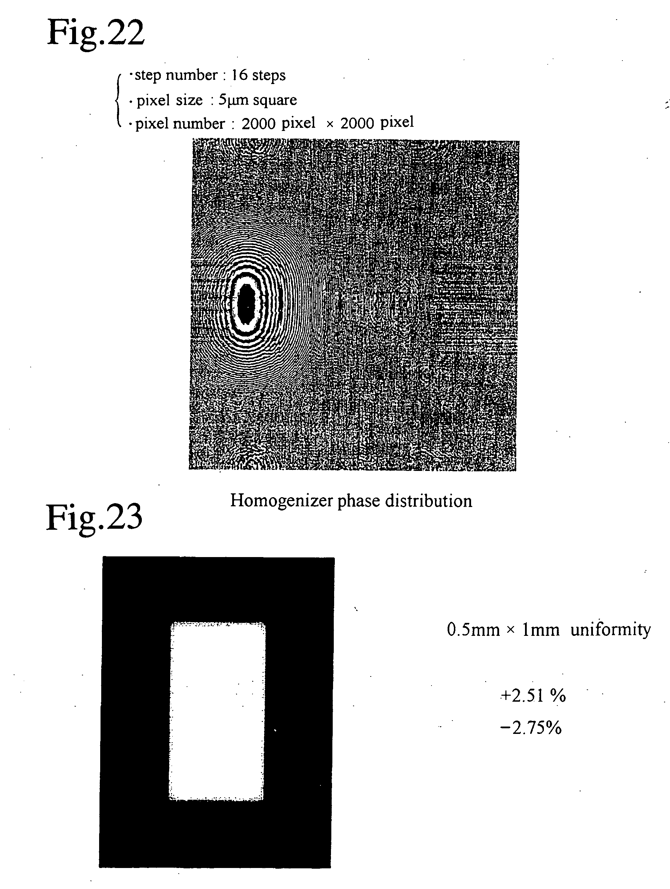

Fig.22 shows phase distribution (step height distribution) of the parallel planar homogenizer DOE without step error of Embodiment 2. Unlike Fig.5, the center of concentric ellipses is deviated to the left. The leftward concentric center means that the DOE is designed to bend and converge an input beam upward as shown in Fig.21 (a).

Fig.23 is a projection of a rectangle-sectioned beam prepared by converting a 2mmφ Gaussian laser beam into a rectangle sectioned uniform power beam by the non-error planar DOE of Embodiment 2. A blank part denotes the 0.5mm$\times$1mm on the image. Even eye-sight can confirm uniform power within the region. The power fluctuation is +2.51% to -2.75% in the 0.5mm$\times$1mm rectangle.

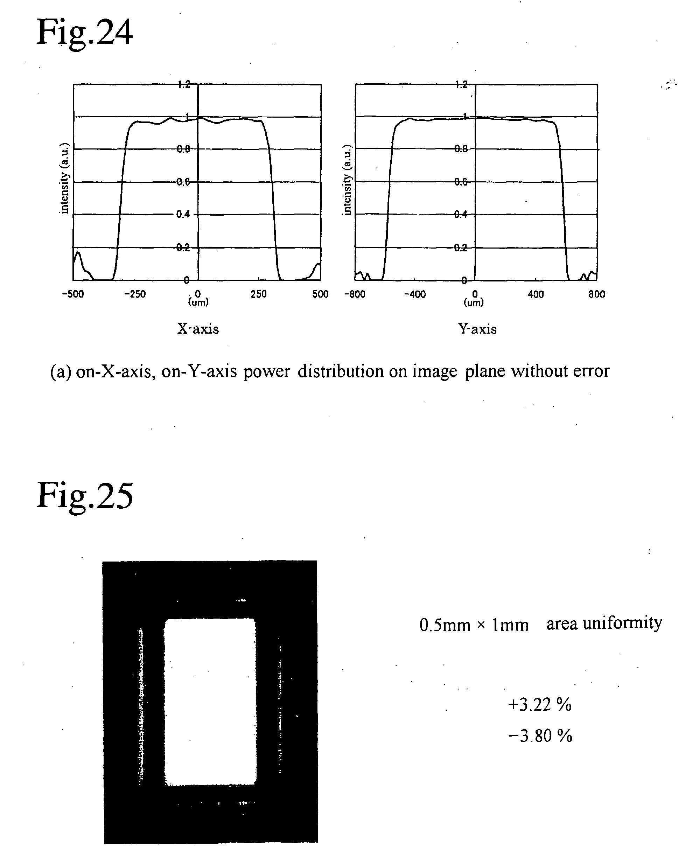

Fig.24 is a graph (left) of on-x-axis power distribution and a graph (right) of on-y-axis power distribution of the beam diffracted on the image plane by a set of a non step-error DOE and a wedge glass block. The power density on the x-axis is nearly uniform between x = -$250\mu m$ and x = +$250\mu m$. The on-y-axis power distribution of the right of Fig. 24 reveals uniformity between y = -$500\mu m$ and y = +$500\mu m$. The non step-error DOE and the wedge block achieve the object of producing uniform power density in a 0.5mm$\times$1.0mm rectangle on the image plane.

Next, another set of a parallel planar DOE and a wedge block with step errors having properties similar to the above DOE/block is produced for examining degradation of power uniformity. A plan view of the step-error allotted DOE/block resembles to the above non-step-error DOE/block. Thus a figure of the step-error-allotted DOE/block is omitted.

In Embodiment 2, the step-error-allotted DOE/block converts the Gaussian power distribution laser beam into a rectangle uniform power distribution beam on the image plane on the same condition as the non-step-error DOE/block. Fig.25 shows the power distribution diffracted by the step-error-allotted DOE/block on the image plane. Eye-sight observation cannot detect power fluctuation. The power fluctuation is +3.22% to -3.80 %. The power distribution is sufficiently quasi-uniform.

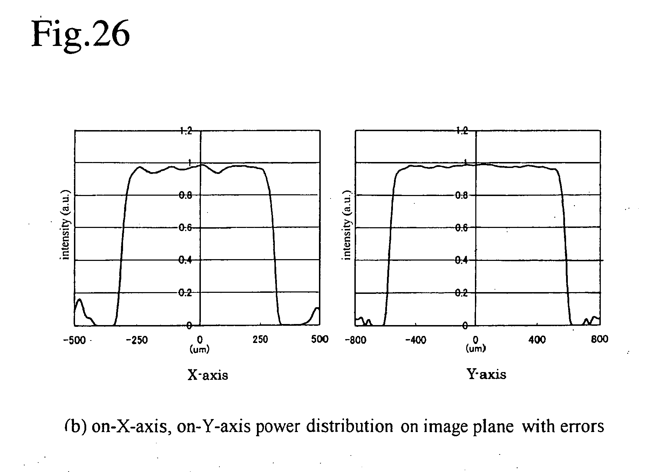

Fig.26 is a graph (left) of on-x-axis power distribution and a graph (right) of on-y-axis power distribution of the beam diffracted by the DOE/block on the image plane by the step-error-allotted DOE. The power density is nearly uniform (0.95-1.0) between x = -$250\mu m$ and x = +$250\mu m$ with little fluctuation. Small drops appear at the same spots as the on-x-axis power distribution of Fig. 24. The small drops of power are not caused by the interference between the zero-th order beam and the diffracted beam. The on-y-axis power distribution of the right of Fig.26 reveals excellent uniformity between y = —$500\mu m$ and y = +$500\mu m$.

The set of the DOE and the wedge glass block of Embodiment 2 of the present invention has also an advantage of reducing the degradation of the power uniformity induced by manufacturing errors. Both a wedged DOE and a set of a parallel planar DOE and a wedge block enable the present invention to alleviate step-error caused degradation by bending the zero-th order beam in a slanting direction and exclude the zero-th order beam out of the image plane (work plane).

**Claims**

1. A wedge-utilizing homogenizer diffraction optical system having a wedge-shaped homogenizer diffraction optical element (DOE) comprising a front surface, a rear surface being not in parallel with the front surface but inclining in average at a definite angle Θ to the front surface, and pixels having a flat top of a height of a definite number of discrete steps, alining lengthwise and crosswise and being formed on one or both of the front and rear surfaces for diffracting an incident beam into a pattern of definite power distribution on an image plane.

2. The wedge-utilizing homogenizer diffraction optical system as claimed in claim 1, wherein an average s of height differences of neighboring pixels of the DOE is s = dtanΘ, where d is a pixel size.

3. The wedge-utilizing homogenizer diffraction optical system as claimed in claim 1, wherein power distribution of the incident beam is Gaussian power distribution.

4. The wedge-utilizing homogenizer diffraction optical system as claimed in claim 1, wherein power distribution in the pattern on the image plane is uniform power distribution.

5. The wedge-utilizing homogenizer diffraction optical system as claimed in claim 1, wherein the angle $\Theta$ of inclining the rear surface to the front surface of the DOE satisfies $\Theta \geqq \{\Upsilon + (D/L)\}/(n-1)$, where D is a diameter of the incident beam, n is a refractive index of the DOE, L is a distance between the DOE and the image plane and T is an angle viewing the pattern on the image plane from a center of the DOE.

6. A wedge-utilizing homogenizer diffraction optical system having a homogenizer diffraction optical element (DOE) comprising a front surface, a rear surface being in parallel with the front surface, and pixels having a flat top of a height of a definite number of discrete steps, alining lengthwise and crosswise and being formed on one or both of the front and rear surfaces for diffracting an incident beam at a slanting angle into a pattern of definite power distribution on an image plane and an axis-bending element placed in front of or at the back of the DOE for bending a beam axis by refracting the beam in a slanting direction which is inverse to the slanting angle diffracted by the DOE.

7. The wedge-utilizing homogenizer diffraction optical system as claimed in claim 6, wherein the axis-bending element has a front surface and a rear surface inclining to the front surface at an angle $\Theta$.

8. The wedge-utilizing homogenizer diffraction optical system as claimed in claim 6, wherein power distribution of the incident beam is Gaussian power distribution.

9. The wedge-utilizing homogenizer diffraction optical system as claimed in claim 6, wherein power distribution in the pattern on the image plane is uniform power distribution.

# Fig.1

diffracted beam

R

S

T

5

2 3 4

k

J a

power distribution on image plane

# Fig.2

S

zero-th order beam
caused by step errors

R T

k

J G

power distribution on image plane

# Fig.3

(a) no step error          (b) step error occurs

# Fig.4

Fig.5

Homogenizer phase distribution

# Fig.6

0.5mm × 1mm    area uniformity

+2.49 %

−2.78 %

# Fig.7

X-axis

Y-axis

(a) on-X-axis, on-Y-axis power distibution on image plane without step error

# Fig.8

0.5mm × 1mm    area uniformity

+3.20 %

−3.84 %

# Fig.9

X-axis                          Y-axis

(b) on-X-axis, on-Y-axis power distribution on image plane with step errors

# Fig.10

Homogenizer phase distribution

# Fig.11

X-axis        Y-axis

0.5mm × 1mm uniformity

+1.94 %    −3.27 %

(a) on-X-axis, on-Y-axis power distribution on image plane without error

# Fig.12

X-axis

Y-axis

0.5mm × 1mm uniformity

+8.73 %　　−7.84%

(b) on-X-axis, on-Y-axis power distribution on image plane with step errors

# Fig.13

## Fig.14

## Fig.15

# Fig.16

# Fig.17

# Fig.18

# Fig.19

$\lambda$

D

$S_0$

n

DOE

$\theta/2$

diffracted beam

48

$T_1$

$T_0$   e

$\Upsilon$

$T_3$

$Z_1$

48

$\theta/2$

near axis | zero-th order beam

$\Theta$

$\theta/2$   $Z_3$

L

$\Theta$ DOE inclination angle
D incident beam diameter

$\theta = \sin^{-1} (n \sin\Theta) - \Theta$

$\Phi_0 = \theta$

$\Phi_{min} = \theta/2$

# Fig.20

Embodiment 2

(b) with step errors

laser beam

**83** **84**

R ———— S ———————————————— T

**2**

**83** **84**

DOE

diffracted beam **4**

θ

Θ

**6**

zero-th order beam

Embodiment 2

(a) without step error

Θ

diffracted beam **4**

R ——— S ————————————————— T

**83** **84**

DOE

# Fig.21

Embodiment 2     (a)

Embodiment 2     (b)

Embodiment 2     (c)

# Fig.22

⎧ ·step number : 16 steps
⎨ · pixel size : 5μm square
⎩ · pixel number : 2000 pixel × 2000 pixel

Homogenizer phase distribution

# Fig.23

0.5mm × 1mm uniformity

+2.51 %
−2.75%

# Fig.24

X-axis

Y-axis

(a) on-X-axis, on-Y-axis power distribution on image plane without error

# Fig.25

0.5mm × 1mm   area uniformity

+3.22 %

−3.80 %

# Fig.26

X-axis

Y-axis

(b) on-X-axis, on-Y-axis power distribution on image plane with errors

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002202414 A
- JP 9061610 A
- US 6433301 B
- JP 2004230432 A

**Non-patent literature cited in the description**

- **JARI TURUNEN ; FRANK WYROWSKI.** Diffractive Optics for Industrial and Commercial Applications. Akademie Verlag, 165-188
- **FRANK WYROWSKI.** Diffractive optical elements: iterative calculation of quantized, blazed phase structures. *J. Opt. Soc. Am. A,* June 1990, vol. 7 (6), 961-969